# EUROPEAN PATENT SPECIFICATION

(11) **EP 0 508 012 B1**
(45) Date of publication and mention of the grant of the patent: **05.08.1998**
(21) Application number: 91303183.7
(22) Date of filing: 10.04.1991
(51) Int. Cl.: C08F 220/34, C08F 220/12, C10M 149/04, C10M 149/06, C10M 149/10, C10M 151/02

(54) **A dispersant/antioxidant viscosity index improving lubricant additive**
Dispergierendes antioxydierendes viskositätsverbesserndes Additiv für Schmieröl
Agent dispersant anti-oxydant améliorant l'index de viscosité comme additif pour huiles lubrifiantes

(43) Date of publication of application: 14.10.1992
(73) Proprietor: Ethyl Additives Corporation, Richmond, Virginia (US)
(72) Inventor: Benfaremo, Nicholas, Wappingers Falls, NY 12590 (US)
(74) Representative: Ben-Nathan, Laurence Albert

(56) References cited:
- US-A- 3 208 944
- US-A- 4 606 834
- US-A- 4 767 553

## Description

This invention relates to Viscosity Index Improvers (VII), and more particularly to an antioxidant bound Viscosity Index Improving polymethacrylate lubricant additive.

As is well known to those skilled in the art, lubricating oils for internal combustion engines typically contain a multitude of additives which function as detergents, dispersants, viscosity index improvers, pour depressants, etc., to improve the properties of the oil. It is found that it is particularly necessary to improve the resistance of a lubricating oil to oxidation.

In developing suitable additives for imparting various properties to lubricating oils, polymethacrylate polymers (PMA's) have been found to be useful for a variety of applications in lubricants. Some of their chief uses are as Viscosity Index (VI) improvers and pour point depressants (PPD's) for lubricants. The preparation of functionalized PMA's has increased in recent years. Many functionalized PMA's contain some amine functionality for the purpose of imparting dispersancy to the polymer. Other functionalized PMA's are also known, but to a lesser extent. There are, however, only a few examples of antioxidants being incorporated into the polymers. In developing PMA's which impart multifunctional properties to VII's and lubricants there has not been proved an adequate process for synthesizing a multifunctional PMA, incorporating an amine type antioxidant.

Thus, it is an object of the present invention to provide a method, i.e. a synthesis, for producing an antioxidant polymethacrylate (PMA).

### DISCLOSURE STATEMENT

US-A-4,036,766 discloses a complex reaction product of (1) an interpolymer of dialkylamino methacrylate, C₁-C₆ alkyl methacrylate, C₁₀-C₁₄ alkyl methacrylate and C₁₆-C₂₀ alkyl methacrylate monomers and (2) a liquid poly (alkene-1) of molecular weight between about 200 and 10,000 prepared by polymerizing the monomers comprising said interpolymer in the presence of said liquid poly (alkene-1). A mineral oil composition of improved viscosity, pour depressing and detergent-dispersant properties and concentrates thereof comprising between about 10 and 95 wt.% of a mineral oil of a lubricating viscosity and between about 0.1 and 90 wt. % of said complex product.

US-A- 4,606,834 discloses lubricating oil compositions which contain a VI improving (VII) pour point depressant. The VII consists essentially of a terepolymer where the monomers are selected from various (C₁₀-C₂₀) alcohols and acrylates.

US-A-4,098,709 discloses polymers containing post-reacted hindered phenol antioxidant functionality as viscosity-index (VI) improvers for high temperature service, particularly for lubricating oils used in diesel engines.

U.S. Application No. 172,664 (Texaco) discloses a reaction product of an ethylene copolymer or terpolymer of a (C₃-C₁₀) alphamonolefin and optionally a non-conjugated diene or triene on which has been grafted an ethylenically unsaturated carboxylic function which is then further derivatized with an amino-aromatic polyamine compound.

The invention provides a dispersant/antioxidant bound, Viscosity Index-improving polymethacrylate composition having a molecular weight ranging from 20,000 to 2,500,000. The composition comprises a base oil and effective amounts of antioxidant and dispersant monomers. The composition being prepared by:
(a) combining an antioxidant monomer with a dispersant monomer and (C₁-C₂₀) alkyl monomers in an oil solvent to provide an intermediate reaction mixture;
(b) stirring and purging the reaction mixture by nitrogen ebullation for 25-35 minutes at 200 ml/min;
(c) heating the purged mixture to 70°-85°C;
(d) adding both a mercaptan and a radical polymerization catalyst to the heated mixture and then after 2.0 hours adding an additional amount of the catalyst to said heated mixture, and then heating said heated mixture for an additional 2.0 hours;
(e) increasing the temperature of the heated mixture to 95°-105°C and maintaining the mixture at such temperature for a sufficient period of time to remove any excess of the polymerization catalyst; and
(f) recovering the product polymethacrylate.

The present invention resides in a dispersant/antioxidant bound, Viscosity Index Improving (VII) polymethacrylate lubricant additive comprising an antioxidant and dispersant monomer.

The antioxidant monomers that may be used to make the present lubricant additive may be selected from the group consisting of an acrylate, a methacrylate, an acrylamide or a methacrylamide which are derived from acrylic or methacrylic acid or their derivatives reacted with an aromatic alcohol, an amine or a phenol compound.

The aromatic alcohol that may be used is a hydroxy diphenylamine represented by the formula 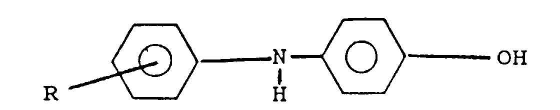 where R is a (C₁-C₁₄) alkyl radical or aryl group or a hydroxy phenothiazine represented by the formula 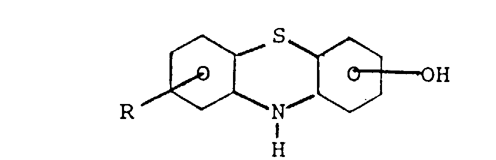 where R is a (C₁-C₁₄) alkyl radical or aryl group.

The dispersant monomer that may be used to produce the present lubricant may be a diamino alkyl methacrylamide or methacrylate where one amino group is a primary or secondary amine and the other amino group is a secondary or tertiary amine.

The acrylate or methacrylate monomers and alkyl acrylate or methacrylate monomers of the present invention are conveniently prepared from the corresponding acrylic or methacrylic acids or their derivatives. These acids can be synthesized using conventional methods and techniques. For example, acrylic acid is prepared by the acidic hydrolysis and dehydration of ethylene cyanohydrin or by the polymerization of β-propiolactone and the destructive distillation of the polymer to form acrylic acid.

Methacrylic acid is readily prepared by the oxidation of a methyl α-alkyl vinyl ketone with metal hypochlorites; the dehydration of -hydroxyisobutyric acid with phosphorus pentoxide; or the hydrolysis of acetone cyanohydrin.

The alkyl acrylate or methacrylate monomers of the present invention are conveniently prepared by reacting the desired primary alcohol with the acrylic acid or methacrylic acid in a conventional esterification catalyzed by acid, preferably p-toluene sulfonic acid and inhibited from polymerization by MEHQ or hydroquinone. Suitable alkyl acrylates or alkyl methacrylates contain from 1 to 30 carbon atoms in the alkyl carbon chain. Typical examples of starting alcohols include methyl alcohol, ethyl alcohol, butyl alcohol, octyl alcohol, iso-octyl alcohol, isodecyl alcohol, undecyl alcohol, dodecyl alcohol, tridecyl alcohol, capryl alcohol, lauryl alcohol, myristyl alcohol, pentadecyl alcohol, palmityl alcohol or stearyl alcohol. It is to be noted that all of the starting alcohols described above can be reacted with acrylic acid or methacrylic acid to form desirable acrylates or methacrylates.

The copolymers useful in the practice of this invention can be prepared in a conventional manner by bulk, solution or emulsion polymerization methods using known catalysts. Thus, the copolymers utilized by this invention can be prepared from the corresponding monomers with a diluent such as water in a heterogeneous system, usually referred to as emulsion or suspension polymerization, or in a homogenous system with a solvent such as toluene, benzene, ethylene dichloride, or an oil solvent which is normally referred to as solution polymerization. Solution polymerization in benzene, toluene or an oil solvent having similar chain transfer activity is the preferred method used in forming the copolymers disclosed herein, because this method and solvent produce the preferred copolymers characterized by a relatively high molecular weight. Solvents normally comprise from about 10 to about 50 weight percent based on the weight of the copolymer.

The polymerization of the monomers uses suitable catalysts which include peroxide type free radical catalysts such as benzoyl peroxide, lauroyl peroxide, or t-butylhydroperoxide; and free radical catalysts such as 2,2'-azobisisobutyronitrile. The catalysts, when used, are employed in concentrations ranging from a few hundreds percent to two percent by weight of the monomers. The preferred concentration is from 0.2 to 1.0 percent by weight of the monomers.

Copolymerization of the monomers used herein takes place over a wide temperature range depending upon the particular monomers and catalyst utilized in the reaction. For example, copolymerization can take place at temperatures as low as -103°F(-75°C) or lower when metallic sodium in liquid ammonia is used as the catalyst. However, the copolymerization reaction is generally carried out at temperatures ranging from 77°F.(25°C) to 302°F.(150°C ) when a catalyst such as 2.2'-azobisisobutyronitrile (AlBN) is used. The copolymerization reaction is preferably carried out in an inert atmosphere, for example, argon or nitrogen to favor the formation of copolymers having relatively high viscosities and molecular weights.

Preferably, the copolymerization reaction is carried out to substantial completion so that the finished product is essentially comprised of the ratio of monomers introduced into the vessel. Normally, a reaction time of from 1 to 72 hours, preferably from 1 to 50 hours, is sufficient to complete the copolymerization process.

The copolymers disclosed herein have an average molecular weight of greater than 20,000, especially a molecular weight range of from 20,000 to 300,000, preferably from 100,000 to 200,000. The molecular weight of the copolymer can conveniently be determined using conventional techniques.

The terpolymers of this invention may be formed from
(1) a first monomer 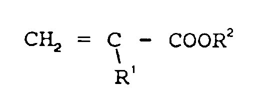 and
(2) a second monomer 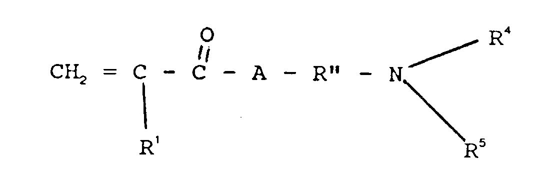 and
(3) a third monomer 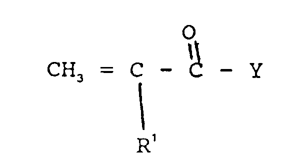 wherein
   A is -NH-, -O-, or -S-;
   R¹ is H or a lower alkyl group;
   R² is a (C₁ - C₂₀) alkyl group;
   R⁴ and R⁵ are alkyl, alkaryl, aralkyl, aryl or arylene groups; R" is an alkylene or cycloalkylene group; and
   Y is an aromatic amine residue.

In the above formula, R¹ may be H or methyl, most preferably methyl.

R² may be an alkyl group containing 1-20 carbon atoms typified by decyl, undecyl, lauryl, tridecyl, myristyl, pentadecyl.

Illustrative of the first monomers which may be employed are those provided below in Table I, the first listed being preferred.

**TABLE I**

| | |
|---|---|
| Neodol 25L | methacrylate |
| Alfol 1620 SP | methacrylate |
| Neodol 25L | acrylate |
| Alfol 1620 SP | acrylate |
| lauryl | methacrylate |
| lauryl | acrylate |
| lauryl | ethacrylate |
| decyl | methacrylate |
| decyl | acrylate |
| undecyl | methacrylate |
| undecyl | acrylate |
| tridecyl | methacrylate |
| tridecyl | acrylate |
| myristyl | methacrylate |
| myristyl | acrylate |
| pentadecyl | methacrylate |
| pentacecyl | acrylate |
| isodecyl | methacrylate |
| isodecyl | acrylate |
| stearyl | methacrylate |
| stearyl | acrylate |
| cetyl | methacrylate |
| cetyl | acrylate |

The NMA and the AMA monomers described above are respectively derived from Neodol 25L and Alfol 1620 SP which are trademarks and names for technical grade alkanols, respectively, of Shell Chemical Co and Continental Oil Co. of the following typical analyses.

| | Typical Approx. Homolog Distribution, wt% |
|---|---|
| Neodol 25L | |
| (Synthetic Lauryl Alcohol) | |
| Lighter than C₁₂OH | 4 |
| C₁₂OH | 24 |
| C₁₃OH | 24 |
| C₁₄OH | 24 |
| C₁₅OH | 13 |
| C₁₆OH | 2 |

| Alfol 1620 SP | |
|---|---|
| (Synthetic Stearly Alcohol) | |
| C₁₄OH and lighter | 4 |
| C₁₆OH | 55 |
| C₁₈OH | 28 |
| C₂₀OH | 9 |

The second monomer which may be employed in practice of the process of this invention may be characterized by the formula

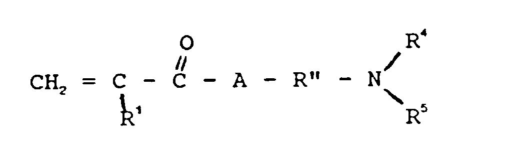

In the above formula R⁴ or R⁵ may be hydrogen or a hydrocarbon selected from the group consisting of alkyl, aralkyl, cycloalkyl, aryl, and alkaryl, including such radicals when inertly substituted. When R⁴ or R⁵ is alkyl, it may typically be methyl, ethyl, n-propyl, isopropyl, n-butyl, isobutyl, sec-butyl, amyl, octyl, decyl, octadecyl. When R⁴ or R⁵ is aralkyl, it may typically be benzyl, betaphenyethyl. When R⁴ or R⁵ is aralkyl, it may typically be benzyl, beta-phenylethyl, When R⁴ or R⁵ is cycloalkyl, it may typically be cyclohexyl, cycloheptyl, cyclooctyl, 2-methylcycloheptyl, 3-butylcyclohexyl, 3-methylcyclohexyl. When R⁴ or R⁵ is alkaryl, it may typically be tolyl, xylyl,

When R⁴ or R⁵ may be inertly substituted i.e. it may bear a non reactive substituent such as alkyl, aryl, cycloalkyl, ether. Typically inertly substituted R⁴ or R⁵ groups may include 2-ethoxyethyl, carboethoxymethyl, 4-methyl cyclohexyl,

The preferred R⁴ or R⁵ groups may be lower alkyl, i.e. C₁-C₁₀ alkyl groups including e.g. methyl, ethyl, n-propyl, i-propyl, butyls, amyls, hexyls, octyls, decyls. R⁴ or R⁵ may preferably be methyl.

In the above formula, R" may be a hydrocarbon group selected from the group consisting of alkylene and cycloalkylene, including such radicals when inertly substituted. When R" is alkylene, it may typically be methylene, ethylene, n-propylene, iso-propylene, n-butylene, i-butylene, sec-butylene, octylene, decylene, octadecylene. When R" is cycloalkylene, it may typically be cyclohexylene, cycloheptylene, cyclooctylene, 2-methycycloheptylene, 3-butylcyclohexylene, 3-methylcyclohexylene.

R" may be inertly substituted i.e. it may bear a non-reactive substituent such as alkyl, aryl, cycloalkyl, ether. Typically inertly substituted R" groups may include 2-ethoxyethylene, carboethoxymethylene, 4-methyl cyclohexylene. The preferred R" groups may be lower alkylene, i.e., C₁-C₁₀ alkylene, groups including e.g. methylene, ethylene, n-propylene, i-propylene, butylene, amylene, hexylene, octylene, decylene. R'' may preferably be propylene - CH₂CH₂CH₂-.

In the above formula, A may be -O-, -S-, or preferably - NH-.

Typical second monomers may be as set forth below in Table II, the first listed being preferred.

**TABLE II**

| | |
|---|---|
| N,N-dimethylaminopropyl | methacrylamide |
| N,N-diethylaminopropyl | methacrylamide |
| N,N-dimethylaminoethyl | acrylamide |
| N,N-diethylaminoethyl | acrylamide |
| N,N-dimethylaminoethyl | methacrylamide |
| N,N-dimethylaminoethyl | acrylamide |
| N,N-dimethylaminoethyl | thiomethacrylamide |

The third monomer which contains an amine may be any of the following:
(a) an amino phenothiazine represented by the formula 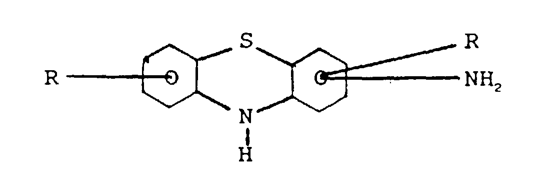 where R is H or a (C₁-C₁₄) alkyl radical or a (C₁-C₁₄) alkaryl group;
(b) an N-arylphenylenediamine represented by the formula: 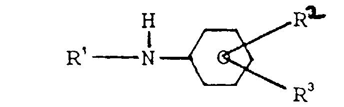 in which R¹ is H, -NHary1, -NHarylalkyl, a branched or straight chain radical having from 4 to 24 carbon atoms that can be alkyl, alkenyl, alkoxyl, aralkyl alkaryl, hydroxyalkyl or aminoalkyl, R² is NH₂, CH₂-(CH₂)ₙ-NH₂, CH₂-aryl-NH₂ in which N has a value from 1 to 10, R₃ is alkyl, alkenyl, alkoxyl, aralkyl, alkaryl, having from 4 to 24 carbon atoms;
(c) an aminothiazole from the group consisting of aminothiazole, aminobenzothiazole, aminobenzothiadiazole and aminoalkylthiazole;
(d) an aminocarbazole represented by the formula: 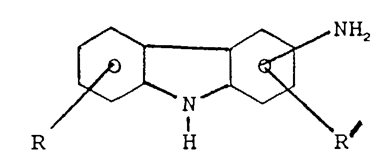 in which R and R' represent hydrogen or an alkyl or alkenyl radical having from 1 to 14 carbon atoms;
(e) an aminoindole represented by the formula: 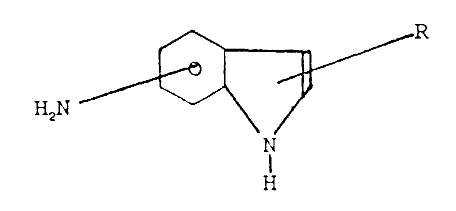 in which R represents hydrogen or an alkyl radical having from 1 to 14 carbon atoms;
(f) an aminopyrrole represented by the formula: 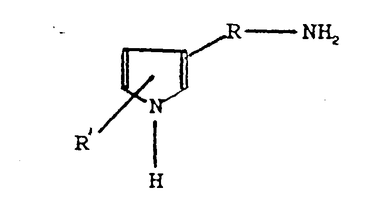 in which R is a divalent alkylene radical having 2-6 carbon atoms and R' is hydrogen or an alkyl radical having from 1 to 14 carbon atoms;
(g) an amino-indazolinone represented by the formula: 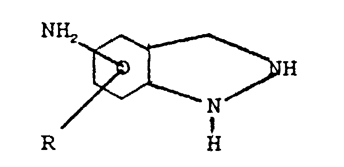 in which R is hydrogen or an alkyl radical having from 1 to 14 carbon atoms;
(h) an aminomercaptotriazole represented by the formula: 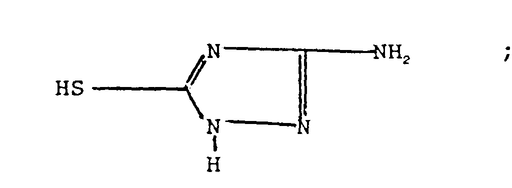 or
(i) an aminoperimidine represented by the formula; 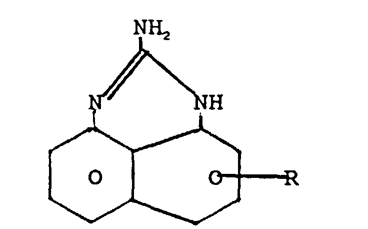 in which R represents hydrogen or an alkyl radical having from 1 to 14 carbon atoms.

The first monomer when prepared commercially may in fact be a mixture obtained by use of a crude alcohol mixture during esterification. The carbon number of the monomer is that of the ester which is the predominant ester in the monomer. Commonly, the carbon number may be the weight average carbon number of the alcohol-derived alkyl group making up the esters.

The three component terpolymers of this invention may be prepared by contacting a mixture consisting essentially of first monomer, second monomer, and third monomer in the presence of a polymerization initiator-catalyst and chain transfer agent in an inert atmosphere in the presence of diluent. Typically 75-98 parts, preferably 90-98, say 92 of first monomer and 1-15 parts, preferably 2-10, say 4 parts of second monomer and 1-15, preferably 2-10, say 4 parts of third monomer may be added to the reaction operation.

The polymerization solvent may typically be an inert hydrocarbon, preferably hydrocarbon lubricating oil (typically N 100 pale oil) which is compatible with or identical to the lubricating oil in which the additive is to be employed present in amount of 5-50 parts, preferably 20-50 parts, say 43 parts per 100 parts of total reactants.

The polymerization initiator-catalyst may be 2,2'-azobisisobutyronitrilen (AIBN), or a peroxide such as benzoyl peroxide, present in amount of 0.05-0.25 parts, preferably 0.1-0.2 parts, say 0.16 parts. Chain terminator may typically be C₈-C₁₀ mercaptans, typified by lauryl mercaptan, present in amount of 0.10 parts, preferably 0.02-0.08 parts, say 0.06 parts.

Polymerization is carried out with agitation at 25°C-150°C., preferably 50°C-100°C., say 83°C, and 0.1-0.8 MPa (0-100 psig) preferably 0.1-0.4 MPa (0-50 psig), say 0.1 MPa (0 psig) for 1-8 hours, say 3 hours. Reaction may be continued until two identical refractive indices are recorded.

The product polymer is characterized by a molecular weight Mn of preferably 20,000-250,000, say 80,000. The component weight ratio of first, second and third monomer may be 75-98: 1-15: 1-15 say 92:4:4.

The polydispersity index (Mw/Mn) of these oil-soluble polymers may be 1-5, preferably 1.5-4, say 2.3.

In a typical reaction, the monomers are charged to the reactor together with polymerization solvent followed by chain terminator. Agitation and inert gas (e.g. nitrogen) flow are initiated. Polymerization initiator is added and the reaction mixture is heated to reaction temperature at which it is maintained until the desired degree of polymerization is attained. Diluent oil (if employed) is added to yield a lube oil concentrate containing about 25-80 wt%, preferably 35-70 wt%, say 40 wt% of the product terpolymer.

The terpolymers prepared may be characterized by the formula:

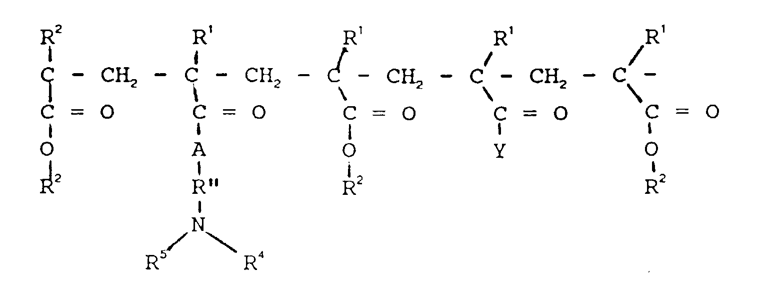

In practice of this invention, a hydrocarbon lubricating oil composition may comprise a major effective portion of a hydrocarbon lubricating oil and a minor effective portion of the additive polymer. The minor effective portion may typically be 0.01-10.0 parts. Preferably 0.1-8 parts, say 5.0 parts, per 100 parts of hydrocarbon lubricating oil. The total composition may also contain other additives typified by oxidation inhibitors, corrosion inhibitors, antifoamants, detergents, dispersants.

Typical of the supplementary detergent-dispersants which may be present may be alkenylsuccinimides derived from polyisobutylene (Mn of 700-5000) overbased calcium alkyl aromatic sulfonate having a total base number of about 300; sulfurized normal calcium alkylphenolate; alkenyl succinimides; etc. as disclosed U.S. Pat No. 3,087,956 and U.S. Pat No. 3,549,534 and U.S. Pat No. 3,537,966.

Typical of the antioxidants which may be present may be zinc or cadmium dialkyl dithiophosphates or dialkyldithiophosphates; alkylated diphenyl amines; sulfurized alkylphenols and phenolates, hindered phenols.

Typical of the corrosion inhibitors which may be present may be zinc dialkyldithiophosphates, basic calcium, barium, or magnesium, sulfonates; calcium, barium, and magnesium phenolates.

It is a feature of this invention that the novel lubricating oil compositions may be characterized by improved pour point when the novel additives are present in amount of 0.05-5.0 wt%, preferably 0.1-0.7 wt%, say 0.3wt% of the lubricating oil.

Typically it may be possible to treat a base lubricating oil of pour point of -12°C, by addition of only 0.3 wt% of additive to yield a product having a pour point of minus 42°C. Pour point is commonly measured by ASTM D-97.

When used as a pour point depressant, it is preferred that the molecular weight (Mn) of the polymer be 20,000-120,000, preferably 20,000-80,000, say 20,000.

It is also a feature of this invention that the novel additives may be used as dispersancy improvers when present in lubricating oil compositions in effective amount of 3.0 wt%-10.0 wt%, preferably 4.0 wt% to 8.0 wt%, say 5.0 wt%. When dispersancy is primarily desired, the molecular weight (Mn) of the polymer may be 20,000-120,000, say 80,000.

The novel additives of this invention may impart viscosity index improvement to lubricating oils when present in amount to 0.25 wt%-10.0 wt%, preferably 2 wt%-8 wt%, say 5.0 wt%. When they are employed primarily as viscosity index improvers, the molecular weight (Mn) may be 20,000-150,000, preferably 40,000-120,000, say 80,000. The Viscosity Index is measured by ASTM D-2270.

It is a feature of the terpolymer additives of this invention (which consist essentially of first, second and third monomer components) that they unexpectedly provide improvements in pour dispersancy, dispersancy, and viscosity index, i.e. they may be used, either in whole or in part, to provide all of these functions. When it is desired to utilize the novel additive to provide all three of these functions, it is preferred that the additive be present in amount of 1.0-5.0wt%, say 3.8 wt% of the lubricating oil composition. In this instance the molecular weight Mn may be 20,000-120,000, preferably 40,000-90,000, say 80,000.

In order to show the advantages of the present invention the following Example is provided as being representative of the best mode of how to practice the invention described herein and not intended to limit the scope thereof.

### EXAMPLE I

### Preparation of a Dispersant - Antioxidant Polymethacrylate (DAOPMA)

To a 1000 ml resin kettle equipped with a condenser, thermocouple, thermometer, and heavy duty stirrer, was added N-(4-anilinophenyl) methacrylamide (8g, 4%), dimethylaminopropyl methacrylamide (8g, 4%), butyl methacrylate (20 g, 10%) neodol 25L methacrylate (152 g, 76%), alfol 1620 SP methacrylate (12 g, 6%) and an oil solvent (N100 Pale Oil, 86g). The reaction mixture was stirred and purged by nitrogen ebullition for 30 min. at 200 ml/min. The mixture was then heated to 80 °C by means of a heat lamp, and dodecyl mercaptan (0.2 g) and AIBN (0.3g) were then added. After 2 hrs., an additional amount of AIBN (0.3g) was added. After 2 hrs., the reaction temperature was increased to 100°C and maintained for 1 hr. to destroy any excess AIBN. The product was diluted in the reaction vessel with N55 Pale Oil (214 g) to give a final concentration of ~40% in oil. An analysis of the product is given below in Table III.

**TABLE III**

| Typical Product Analyses | |
|---|---|
| Kin. Vis. 40°C | 84.1 cSt (8.4 x 10⁻³m²/s) |
| Kin. Vis. 100°C | 12.16 cSt (1.2 x 10⁻³m²/s) |
| % Nitrogen | 0.99 |
| Refractive Index 80% Conc. (48.3°C) | 1.4667 |

In an additional test, the pour point was determined to be -36°C. In the test a 5% blend of the product of Example 1 was blended in a conventional base oil. In order to measure the antioxidant properties of the polymer product a Bench Oxidation Test (BOT) was used as described below.

### Evaluation of Antioxidant Properties

A Bench Oxidation Test (BOT) was used to measure the antioxidant properties of the polymer. This test measures the relative increase of the carbonyl absorption band of 1710 cm⁻¹ of an oxidized oil, over that of the starting material.

### BOT TEST PROCEDURE

The test is conducted in a 2 L, 4-neck resin kettle equipped with a thermometer, condenser, gas bubbling tube and a mechanical stirrer. The polymer (3.75 wt% of a 40 wt% concentrate) was added along with 1235 g of SNO-7 oil. The reaction mixture was stirred and purged with nitrogen for 30 min. The solution was then heated to 150°C and initial samples were taken (0 hr. samples). The oxidation is started by switching from a nitrogen purge to one of air at a rate of 500 ml/min. The stirring rate is kept between 675 and 700 rpm's. Samples are taken periodically using a syringe and evacuated test tubes. They are then quickly stored in a refrigerator to quench the oxidation. BOT DIR values are obtained by using a Differential Infrared technique (DIR) in which the carbonyl absorption band at 1710 cm⁻¹ of the zero hour sample, is subtracted from that of the final product (144 hrs.).

The SNO-7 will give a DIR of ~7 if no antioxidant is used, so values less that 7 are considered indicative of antioxidant properties. In Example 1, a DIR of 1.77 was obtained. The dispersant properties of the polymer product were determined by a Bench Sludge Test (BST) as described below.

### Evaluation of Dispersancy Properties

The dispersancy of the additives was evaluated in the Bench Sludge Test (BST) which measures the ability of a dispersant to solubilize particles in the oil. This test is conducted by heating the test oil mixed with a synthetic hydrocarbon blowby and a diluent oil at a fixed temperature for a fixed time period. After heating, the turbidity of the resulting mixture is measured. A low percentage turbidity (0-10) is indicative of good dispersancy while an intermediate value (20-40) indicates intermediate dispersancy and a high value (20-100) indicates an increasingly poor dispersancy. The additives were tested at a 4.85 wt% treating dosage in an SAE 10W-30 formulation and compared to good, fair and poor references as provided below in Table IV. The data clearly shows our DAOPMA to provide better dispersancy than the polymer without any dispersant moiety, or than the polymer with additional antioxidant replacing the dispersant moiety.

**TABLE IV**

| BENCH SLUDGE TEST RESULTS | | | | |
|---|---|---|---|---|
| POLYMER | CONCENTRATION | %DISPERSANT GRAFT | %ANTIOXIDANT GRAFT | BST RESULT |
| EXAMPLE 1 | 4.85% | 4.0 | 4.0 | 26 |
| STANDARD | 4.85% | 0.0 | 4.0 | 93 |
| ADDITIVE | 4.85% | 0.0 | 8.0 | 90.5 |

In the formation of an oil, a low pour point is important. According to the present invention, the pour point may be lowered from about -25°C to about -40°C. The procedure for evaluating the pour point depressant properties is provided below.

### Evaluation of Pour Point Depressant Properties

The pour point of an oil is measured by the ASTM D-97 test. Pour point depressants are evaluated at how much they depress the pour point of an oil. A particular base oil has a pour point of -12°C. The addition of a commercial pour point depressant at 5.0 wt% effectively lowers the pour point of the base oil to -30°C. The product of Example 1, however, effectively lowers the pour point of the base oil to about - 36°C when used at 5.0 wt%.

## Claims

1. A polymeric dispersant/antioxidant, Viscosity Index Improving polymethacrylate composition, having a molecular weight Mn ranging from 20,000 to 2,500,000, said composition comprising a base oil and 1.0 wt.% - 15 wt.% of a dispersant monomer 1.0 wt.% - 10 wt.% of an antioxidant monomer, and 75 wt.%. - 98 wt.% of an alkyl monomer, said composition being prepared by:
(a) mixing a dispersant monomer of the formula 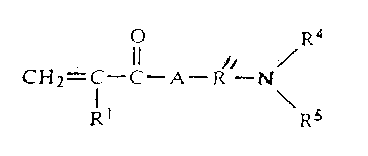 with an antioxidant monomer of the formula 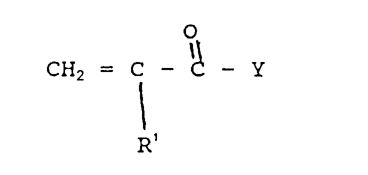 and an alkyl monomer of the formula 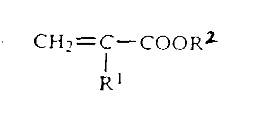 wherein
A is -NH-, -O- or -S-;
R¹ is H or methyl;
R² is a (C₁-C₂₀) alkyl group;
R⁴ and/or R⁵ are independently hydrogen, alkyl, alkaryl, cycloalkyl, aralkyl, aryl or arylene groups;
R" is an alkylene or cycloalkylene group; and
Y is an aromatic amine residue and an oil solvent to provide an intermediate reaction mixture;
(b) stirring and purging said reaction mixture by nitrogen ebullition for 25-35 minutes at 200 ml/min;
(c) heating said purged mixture to 70°C -85°C;
(d) adding both a chain terminating agent and a radical polymerization catalyst to said heated mixture;
(e) increasing the temperature of said heated mixture and maintaining said mixture at such temperature for a sufficient period of time to remove any excess polymerization catalyst.

2. A composition as claimed in Claim 1, wherein the antioxidant monomer is an acrylate, a methacrylate, an acrylamide or a methacrylamide, which are derived from acrylic or methacrylic acid or their derivates, reacted with an aromatic alcohol, an amine or a phenol compound.

3. A composition as claimed in Claim 1, wherein the dispersant monomer is a diamino alkyl methacrylamide or methacrylate where one amino group is a primary or secondary amine and the other amino group is a secondary or tertiary amine.

4. A composition as claimed in Claim 2, wherein the phenol compound is a hydroxy diphenylamine or an alkyl derivative thereof.

5. A composition as claimed in Claim 2, wherein the phenol is a hydroxy diphenylamine of formula: 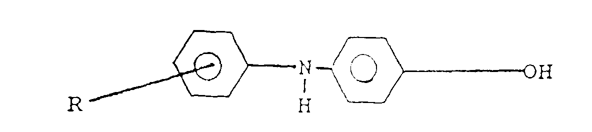 where R is a (C₁-C₁₄) alkyl radical or aryl group or a hydroxy phenothiazine of formula: 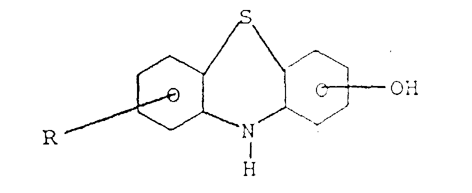 where R is a (C₁-C₁₄) alkyl radical or aryl group.

6. A composition as Claimed in Claim 2, wherein the amine is:
(a) an amino phenothiazine of formula: 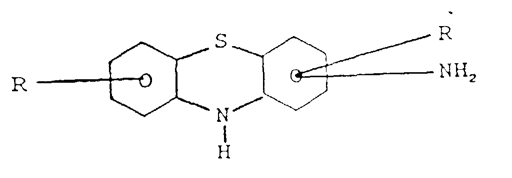 where R is H or a (C₁-C₁₄) alkyl radical or a (C₁-C₁₄) alkaryl group;
(b) N-arylphenylenediamine of formula: 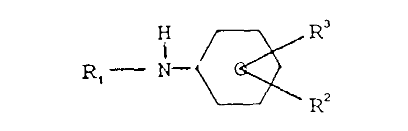 in which R¹ is H, -NHaryl, -NHarylalkyl, a branched or straight chain radical having from 4 to 24 carbon atoms that can be alkyl, alkenyl, alkoxyl, aralkyl alkaryl, hydroxyalkyl or aminoalkyl, R² is NH₂, CH₂-(CH₂)ₙ-NH₂ CH₂-aryl-NH₂ in which n has a value from 1 to 10, R₃ is alkyl, alkenyl, alkoxyl, aralkyl, alkaryl, having from 4 to 24 carbon atoms;
(c) an aminothiazole selected from aminothiazole, aminobenzothiazole, aminobenzothiadiazole and aminoalkylthiazole;
(d) an aminocarbazole of formula: 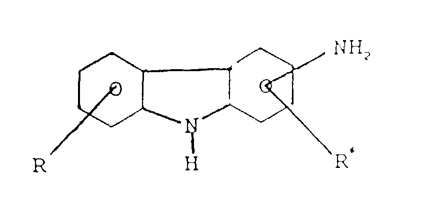 in which R and R' represent hydrogen or an alkyl or alkenyl, radical having from 1 to 14 carbon atoms;
(e) an aminoindole of formula: 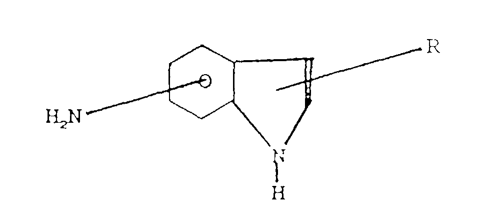 wherein R is hydrogen or an alkyl radical having from 1 to 14 carbon atoms;
(f) an aminopyrrole of formula: 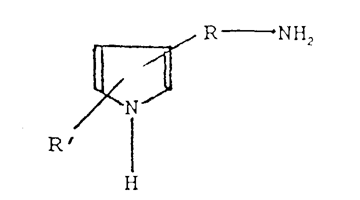 in which R is a divalent alkylene radical having from 2 to 6 carbon atoms and R' hydrogen or an alkyl radical having from 1 to 14 carbon atoms;
(g) an amino-indazolinone of formula: 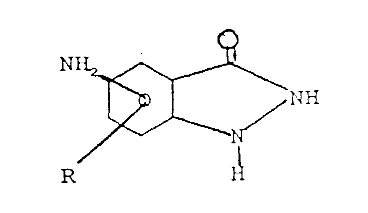 in which R is hydrogen or an alkyl radical having from 1 to 14 carbon atoms;
(h) an aminomercaptotriazole of formula: 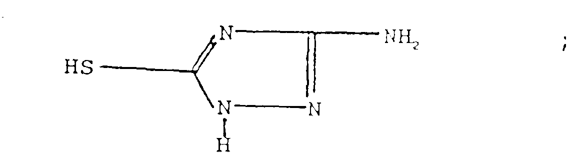 and
(i) an aminoperimidine of formula:

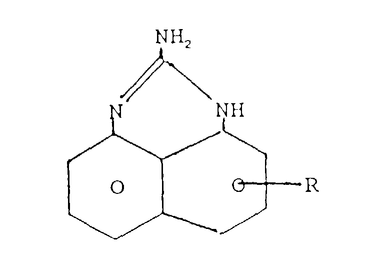

7. A composition as claimed in anyone of Claims 3 wherein said methacrylamide is N-(4-anilinophenyl) methacrylamide or dimethylaminopropyl methacrylamide or N-(4-Anilinophenyl) methacrylamide.

8. A composition as claimed in anyone of Claims 1 to 7, wherein the dispersant is N-vinyl-2-pyrrolidone.

9. A composition as claimed in anyone of Claims 1 to 8, wherein the radical polymerization catalyst is selected from the group consisting of 2,2'-Azobisisobutyronitrile, dicumylperoxide and benzoyl peroxide.

## Patentansprüche

1. Eine polymere Dispergiermittel/Antioxydans, Viskositätsindex verbessernde Polymethacrylat-Zusammensetzung mit einem Molekulargewicht Mn im Bereich von 20.000 bis 2.500.000, umfassend ein Basisöl und 1,0 Gew.-% - 15 Gew.-% eines Dispergiermittel-Monomers, 1,0 Gew.-% - 10 Gew.-% eines Antioxydansmonomers und 75 Gew.-% - 98 Gew.-% eines Alkylmomomers, wobei die Zusammensetzung hergestellt wird durch:
(a) Mischen eines Dispergiermittel-Monomers der Formel 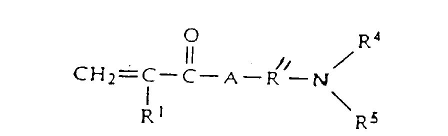 mit einem Antioxydansmonomer der Formel 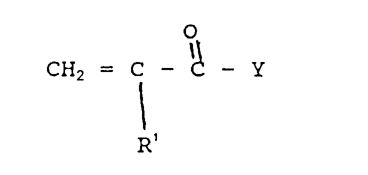 und eines Alkylmonomers der Formel 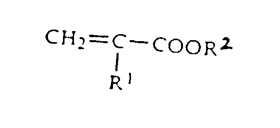 worin
A -NH-, -O- oder -S- ist;
R¹ H oder Methyl ist;
R² eine (C₁-C₂₀)-Alkylgruppe ist;
R⁴ und/oder R⁵ unabhängig voneinander Wasserstoff-, Alkyl-, Alkaryl-, Cycloalkyl-, Aralkyl-, Aryl- oder Arylen-Gruppen sind;
R" eine Alkylen- oder Cycloalkylen-Gruppe ist; und
Y ein aromatischer Amin-Rest ist
und ein Öllösungsmittel, um ein Zwischenreaktionsgemisch zu liefern;
(b) Rühren und Spülen des Reaktionsgemisches durch Stickstoffsieden für 25-35 Minuten bei 200 ml/min;
(c) Erwärmen des gespülten Gemisches auf 70° C - 85° C;
(d) Hinzufügen sowohl eines Kettenabbruchmittels als auch eines Radikalkettenpolymerisationskatalysators zu dem erwärmten Gemisch;
(e) Erhöhen der Temperatur des erwärmten Gemisches und Erhalten des Gemisches auf einer solchen Temperatur für eine ausreichende Zeitdauer, um jeglichen Überschuß an Radikalkettenpolymerisationskatalysator zu entfernen.

2. Eine Zusammensetzung gemäß Anspruch 1, worin das Antioxydansmonomer ein Acrylat, ein Methacrylat, ein Acrylamid oder ein Methacrylamid ist, die von Acryl- oder Methacrylsäure oder deren Derivate, umgesetzt mit einem aromatischen Alkohol, einem Amin oder einer Phenolverbindung, abgeleitet sind.

3. Eine Zusammensetzung gemäß Anspruch 1, worin das Dispergiermittel-Monomer ein Diaminoalkylmethacrylamid oder Methacrylat ist, worin eine Aminogruppe ein primäres oder sekundäres Amin ist und die andere Aminogruppe ein sekundäres oder tertiäres Amin ist.

4. Eine Zusammensetzung gemäß Anspruch 2, worin die Phenolverbindung ein Hydroxydiphenylamin oder ein Alkylderviat davon ist.

5. Eine Zusammensetzung gemäß Anspruch 2, worin das Phenol ein Hydroxydiphenylamin der Formel: 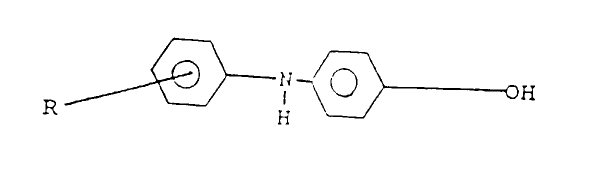 ist, worin R ein (C₁-C₁₄)-Alkylradikal oder eine Aryl-Gruppe oder ein Hydroxyphenothiazin der Formel: 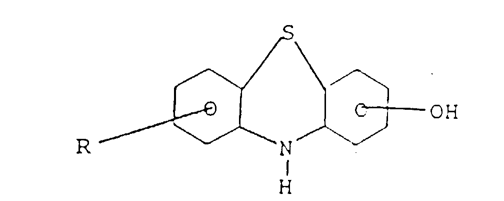 ist, worin R ein (C₁-C₁₄)-Alkylradikal oder eine Aryl-Gruppe ist.

6. Eine Zusammensetzung gemäß Anspruch 2, worin das Amin ist:
(a) ein Aminophenothiazin der Formel: 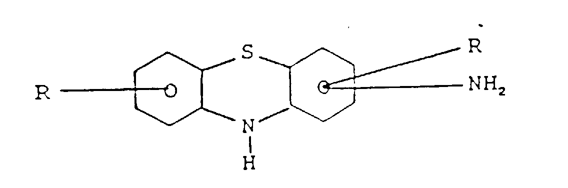 worin R H oder ein (C₁-C₁₄)-Alkylradikal oder eine (C₁-C₁₄)-Alkaryl-Gruppe ist;
(b) N-Arylphenylendiamin der Formel: 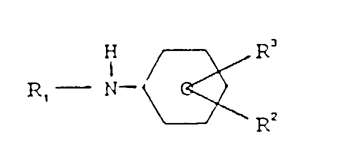 worin R¹ H, -NHaryl, -NHarylalkyl, ein verzweigtes oder geradkettiges Radikal mit 4 bis 24 Kohlenstoffatomen ist, welches Alkyl, Alkenyl, Alkoxyl, Aralkyl, Alkaryl, Hydroxalkyl oder Aminoalkyl sein kann, R² NH₂, CH₂-(CH₂)ₙ-NH₂, CH₂-Aryl-NH₂ ist, worin n einen Wert von 1 bis 10 hat, R₃ Alkyl, Alkenyl, Alkoxyl, Aralkyl, Alkaryl mit 4 bis 24 Kohlenstoffatomen ist;
(c) ein Aminothiazol, ausgewählt aus Aminothiazol, Aminobenzothiazol, Aminobenzothiadiazol und Aminoalkylthiazol;
(d) ein Aminocarbazol der Formel: 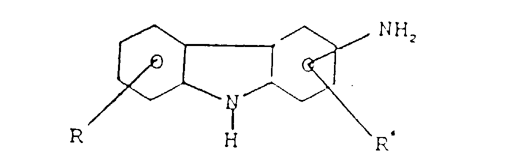 worin R und R' Wasserstoff oder ein Alkyl- oder Alkenyl-radikal mit 1 bis 14 Kohlenstoffatomen darstellen;
(e) ein Aminoindol der Formel: 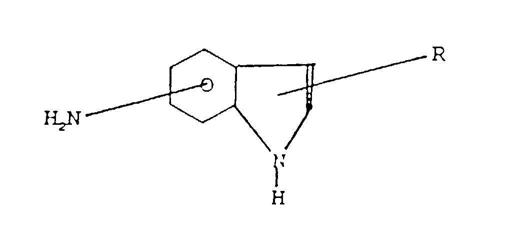 worin R Wasserstoff oder ein Alkylradikal mit 1 bis 14 Kohlenstoffatomen ist;
(f) ein Aminopyrrol der Formel: 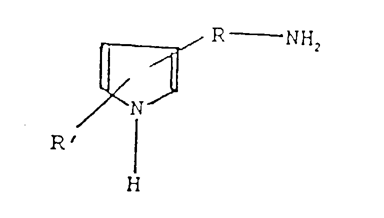 worin R ein zweiwertiges Alkylenradikal mit 2 bis 6 Kohlenstoffatomen ist und R' Wasserstoff oder ein Alkylradikal mit 1 bis 14 Kohlenstoffatomen ist;
(g) ein Amino-Indazolinon der Formel: 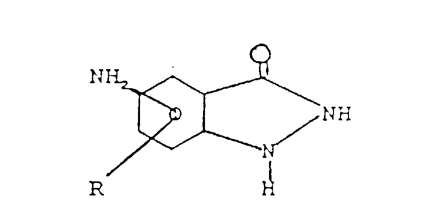 worin R Wasserstoff oder ein Alkylradikal mit 1 bis 14 Kohlenstoffatomen ist;
(h) ein Aminomercaptotriazol der Formel: 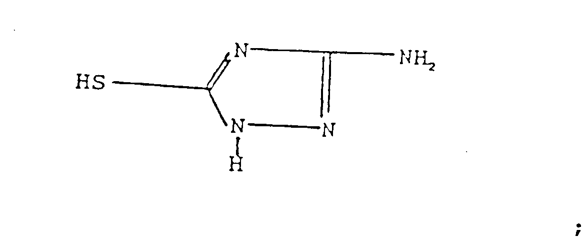 und
(i) ein Aminoperimidin der Formel:

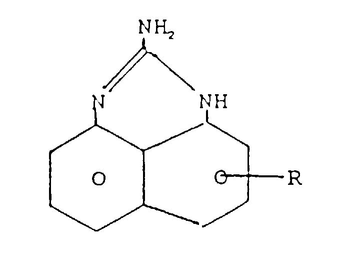

7. Eine Zusammensetzung gemäß Anspruch 3, worin das Methacrylamid N-(4-Anilinophenyl)methacrylamid oder Dimethylaminopropylmethacrylamid oder N-(4-Anilinophenyl)methacrylamid ist.

8. Eine Zusammensetzung gemäß einem der Ansprüche 1 bis 7, worin das Dispergiermittel N-Vinyl-2-Pyrrolidon ist.

9. Eine Zusammensetzung gemäß einem der Ansprüche 1 bis 8, worin der Radikalkettenpolymerisationskatalysator ausgewählt ist aus der Gruppe, bestehend aus 2,2'-Azobisisobutyronitril, Dicumylperoxid und Benzoylperoxid.

## Revendications

1. Composition de polyméthacrylate dispersante/antioxydante polymérique, améliorant l'indice de viscosité, ayant un poids moléculaire Mn compris entre 20 000 et
2 500 000, cette composition comprenant une huile de base et de 1,0 à 15 % en poids d'un monomère dispersant, de 1,0 % à 10 % en poids d'un monomère antioxydant, et de 75 % à 98 % en poids d'un monomère d'alkyle, la composition étant préparée par les opérations suivantes:
(a) mélange d'un monomère dispersant de formule 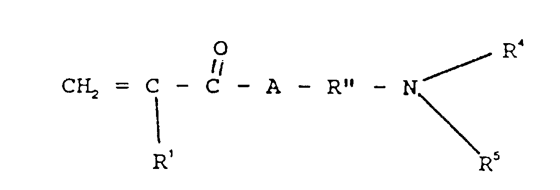 avec un monomère antioxydant de formule 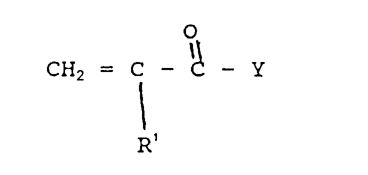 et un monomère d'alkyle de formule 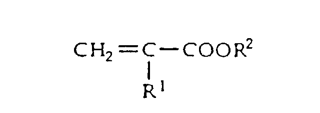 où
A représente -NH-, -O-, ou -S- ;
R¹ représente H ou un méthyle ;
R² représente un groupe alkyle en C₁ à C₂₀ ;
R⁴ et/ou R⁵ représentent indépendamment un hydrogène, des groupes alkyle, alkaryle, cycloalkyle, aralkyle, aryle ou arylène ;
R" est un groupe alkylène ou cycloalkylène ; et
Y est un résidu amine aromatique,
et un solvant huileux pour fournir un mélange réactionnel intermédiaire.
(b) agitation et purge du mélange réactionnel par ébullition d'azote pendant environ 25-30 minutes à 200 ml/minute ;
(c) chauffage du mélange purgé à 70-85°C ;
(d) addition à la fois d'un agent rupteur de réaction en chaîne et d'un catalyseur de polymérisation radicalaire au mélange chauffé ;
(e) augmentation de la température du mélange chauffé et maintien du mélange à une telle température pendant une durée suffisante pour enlever tout excès éventuel de catalyseur de polymérisation.

2. Composition selon la revendication 1,
dans laquelle
le monomère antioxydant est un acrylate, un méthacrylate, un acrylamide ou un méthacrylamide, qui sont dérivés de l'acide acrylique ou de l'acide méthacrylique ou de leurs dérivés, que l'on a fait réagir avec un alcool aromatique, une amine ou un composé de phénol.

3. Composition selon la revendication 1,
dans laquelle
le monomère dispersant est un diamino-alkylméthacrylamide ou méthacrylate dans lequel le groupe amino est une amine primaire ou secondaire et l'autre groupe amino est une amine secondaire ou tertiaire.

4. Composition selon la revendication 2,
dans laquelle
le composé de phénol est une hydroxydiphénylamine ou un de ses dérivés alkyle.

5. Composition selon la revendication 2,
dans laquelle
le phénol est une hydroxydiphénylamine de formule : 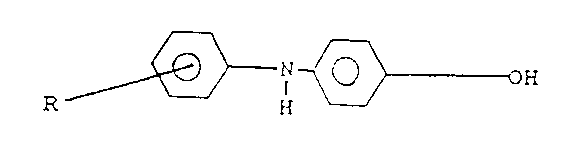 dans laquelle R est un radical alkyle en C₁ à C₁₄, ou un groupe aryle, ou une hydroxyphénothiazine de formule : 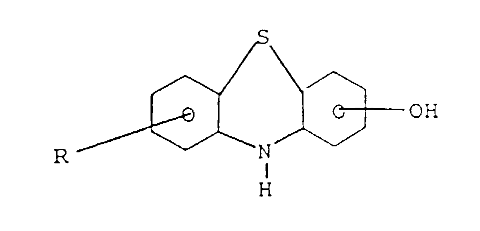 dans laquelle R est un radical alkyle en C₁ à C₁₄ ou un groupe aryle.

6. Composition selon la revendication 2,
dans laquelle
l'amine est :
(a) une amino phénothiazine de formule : 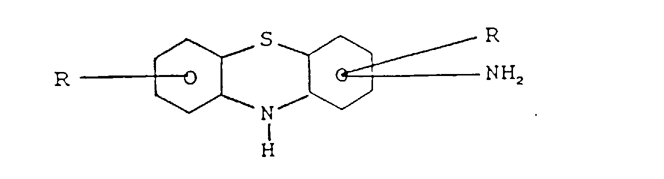 dans laquelle R représente H ou un radical alkyle en C₁ à C₁₄, ou un groupe alkaryle en C₁ à C₁₄ ;
(b) une N-arylphénylène diamine de formule : 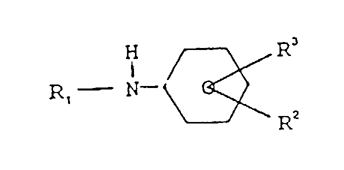 dans laquelle R représente H, -NHaryle, -NHarylalkyle, un radical à chaîne droite ou ramifiée ayant de 4 à 24 atomes de carbone qui peut être un alkyle, alcényle, alcoxyle, aralkyle, alkaryle, hydroxyalkyle ou aminoalkyle, R² représente NH₂, CH₂-(CH₂)ₙ-NH₂, CH₂-aryl-NH₂ où N a une valeur comprise entre 1 et 10, R₃ est un alkyle, alcényle, alcoxyle, aralkyle, alkaryle, ayant de 4 à 24 atomes de carbone ;
(c) un aminothiazole choisi parmi l'aminothiazole, l'aminobenzothiazole, l'aminobenzothiadiazole et l'aminoalkylthiazole ;
(d) un aminocarbazole de formule : 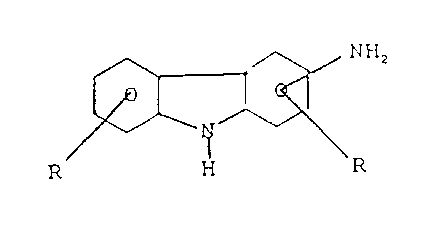 dans laquelle R et R' représentent un hydrogène ou un radical alkyle ou alcényle ayant de 1 à 14 atomes de carbone ;
(e) un aminoindole de formule : 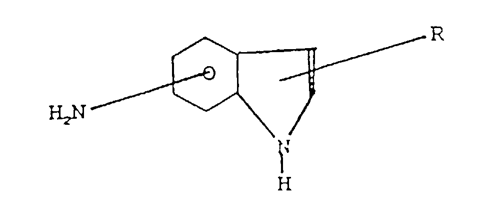 dans laquelle R représente un hydrogène ou un radical alkyle ayant de 1 à 14 atomes de carbone ;
(f) un aminopyrrole représenté par la formule : 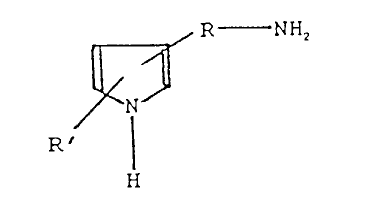 dans laquelle R est un radical alkylène bivalent ayant de 2 à 6 atomes de carbone et R' est un hydrogène ou un radical alkyle ayant de 1 à 14 atomes de carbone ;
(g) une amino-indazolinone de formule : 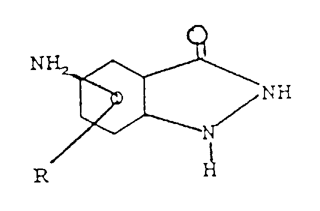 dans laquelle R est un hydrogène ou un radical alkyle ayant de 1 à 14 atomes de carbone ;
(h) un aminomercaptotriazole de formule : 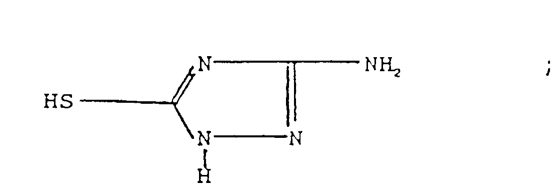 et
(i) une aminopyrimidine de formule :

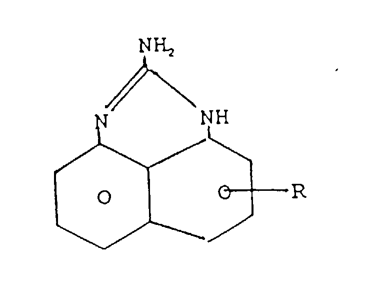

7. Composition selon l'une quelconque des revendications 3 dans laquelle
le méthacrylamide est le N-(4-anilinophényl)méthacrylamide, le diméthylaminopropyl méthacrylamide ou le N-(4-anilinophényl)méthacrylamide.

8. Composition selon l'une quelconque des revendications 1 à 7,
dans laquelle
le dispersant est la N-vinyl-2-pyrrolidone.

9. Composition selon l'une quelconque des revendications 1 à 8,
dans laquelle
le catalyseur de polymérisation radicalaire est choisi dans le groupe constitué par le 2,2'-azobisisobutyronitrile, le peroxyde de dicumyle et le peroxyde de benzoyle.
